**Europäisches Patentamt**

**European Patent Office**

**Office européen des brevets**

(19)

(11) Publication number: **0 105 654**
**A1**

(12) # EUROPEAN PATENT APPLICATION

(21) Application number: **83305463.8**

(22) Date of filing: **16.09.83**

(51) Int. Cl.³: **A 61 C 15/00**

(30) Priority: **22.09.82 GB 8227087**

(43) Date of publication of application:
**18.04.84 Bulletin 84/16**

(84) Designated Contracting States:
**DE FR GB IT**

(71) Applicant: **Grosse, Maurice**
**25, Woodberry Crescent Muswell Hill**
**London N10 1PJ(GB)**

(72) Inventor: **Grosse, Maurice**
**25, Woodberry Crescent Muswell Hill**
**London N10 1PJ(GB)**

(74) Representative: **Walter, Douglas Ernest et al,**
**HASELTINE LAKE & CO. 28, Southampton Buildings**
**London WC2A 1AT(GB)**

(54) **Toothpicks.**

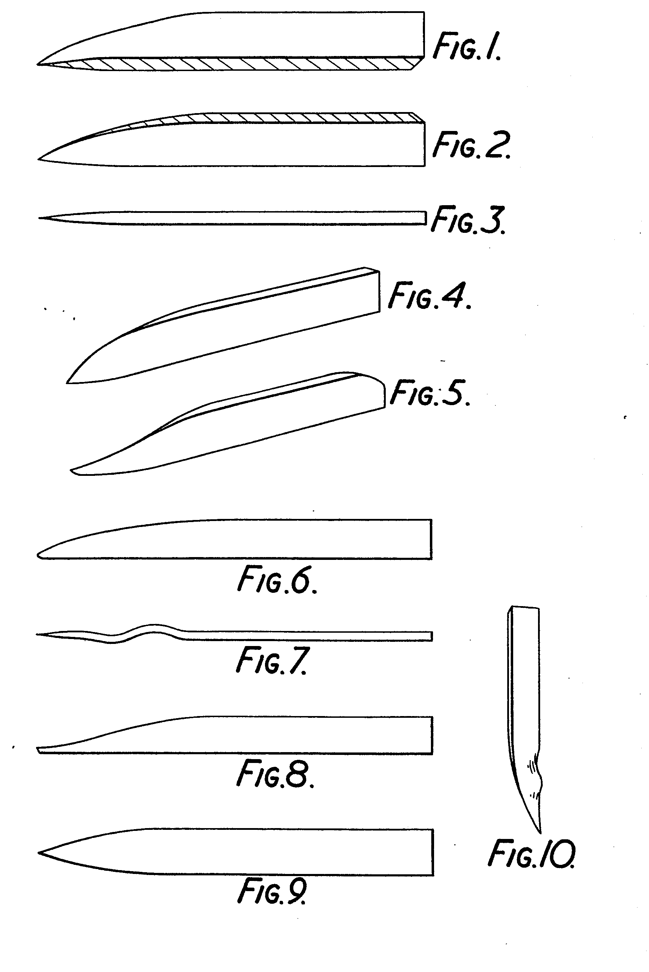

(57) A toothpick is formed from a laminate synthetic plastics foam section of three millimetres thickness comprising expanded polystyrene foam flanked at one or both sides by a polyvinyl chloride layer having a smooth outer surface (Figure 4). An alternative toothpick comprises a basically planar strip of sheet polystyrene or sheet acetate shaped to define a pointed end and a handle end, the toothpick having corrugations, towards its pointed end, at one or both of its longitudinal edges (Figure 10).

FIG.4.

FIG.10.

EP 0 105 654 A1

# TOOTHPICKS

This invention relates to toothpicks and it is noted that the term "toothpick(s)" is intended, in this document, to include not only the traditional toothpick designed to remove food particles from between the teeth, after eating, but also articles resembling toothpicks that are designed to promote a healthy gum condition by massaging the gums using a more or less reciprocatory action between the teeth.

Many toothpicks are made from wood but this has the disadvantage of being somewhat variable in quality, and consequently in its physical characteristics, due to its natural origin. Although soft woods are usually employed, the resulting toothpicks frequently have a degree of hardness which is too great for optimum dental usage. A second form of toothpick is quite popular and comprises a relatively hard synthetic plastics tube of small diameter, the "working" end of the tube being cut away in a plane inclined at a small angle to the longitudinal axis of the tube to produce a point at one lateral side of the latter. Once again, such toothpicks are really too hard for optimum dental usage and are not suitable for employment in gum massage treatments.

It is an object of the present invention to overcome, or significantly reduce, the disadvantages of known toothpicks that are briefly described above and, accordingly, one aspect of the invention provides a toothpick of substantially planar formation, the toothpick being formed wholly or partly from a foamed synthetic plastics material. According to a second aspect of the invention, there is provided a toothpick of basically planar formation and formed from a synthetic plastics material, the toothpick having a pointed end and a handle end, wherein a region of the toothpick towards the pointed end thereof has corrugations, at at least one of its longitudinal edges, relative to the basically planar remainder of the toothpick.

For a better understanding of the invention, and to show how the same may be carried into effect, reference will now be made, by way of example, to the accompanying drawings, in which:-

Figure 1 is an elevation showing the bottom and one side of one form of a toothpick in accordance with the present invention,

Figure 2 is an elevation showing the top and the same side of the toothpick of Figure 1,

Figure 3 is an underneath plan view of the same toothpick,

Figure 4 is a top perspective view corresponding to Figures 1 to 3,

Figure 5 corresponds to Figure 4 but illustrates an alternative shape of the toothpick,

Figure 6 is a side elevation illustrating a second form of basically planar toothpick in accordance with the invention,

Figure 7 is a top plan view showing the formation of the toothpick of Figure 6 in greater detail,

Figures 8 and 9 correspond to Figure 6 but illustrate toothpicks whose pointed ends are of different shapes, and

Figure 10 illustrates a modification of the toothpick of Figures 6 and 7.

Referring to the accompanying drawings, and firstly to Figures 1 to 4 thereof, the toothpick that is illustrated in those Figures is formed principally from high density expanded polystyrene foam. The use of three millimeter (0.118 inch) thickness laminate foam section is particularly advantageous since it gives the exterior side surfaces of the toothpick a smooth and strengthened finish as compared with the cellular interior thereof. It is not essential that both side surfaces of the toothpick should be smooth laminar surfaces and one surface may, if preferred, be left in its cellular condition. Advantageously, the non-foamed layer, or each outer layer, of the laminate may be formed from polyvinyl chloride.

As can be seen in Figures 1, 2 and 3 of the drawings, the right-hand end of the toothpick, in those Figures, is a handle end whereas the opposite left-hand end is brought to a point to form the "working" end that can be used to remove food particles adhering to the teeth and to be poked between the teeth. In addition to the point at the "working" end being formed by tapering the upper edge of the toothpick to meet the lower edge thereof, it can be seen in Figures 1 and 3 that the point is also formed by tapering the opposite side surfaces of the toothpick towards one another. The toothpick can readily be made on a conventional press tool using both heat and pressure or, preferably , pressure alone. The versatility of synthetic plastics materials readily allows the manufactured toothpicks to be joined together in one of a number of different ways. Very conveniently, the right-hand end of each toothpick as shown in Figures 1 to 4 of the drawings can be joined, via a corresponding perpendicular score line, to a base strip (not shown). With this construction, a number of the toothpicks can be enclosed in a holder, somewhat resembling a so-called book of matches, the base strip being secured by an adhesive or in some other simple way to the holder itself and the individual toothpick then being capable of being torn away, along the corresponding score line, when required. Another possibility is to form the toothpicks in a strip in which they are joined together end-to-end, each individual toothpick being reversed relative to both its neighbours as regards both its upper and lower edges and its opposite ends.  Very little waste of the synthetic plastics material is involved by forming the toothpicks in this way.

In the use of a toothpick constructed in the manner just described and as illustrated in Figures 1 to 4 of the drawings, the pointed end thereof is employed in a conventional way in picking adhering  pieces of food from between the teeth after a meal.  However, additionally, the construction of the toothpick greatly facilitates its use in being pushed  between the teeth both to remove stubbornly adhering  pieces of food and to massage the gums,  this being the area where oral bacteria commonly multiply with a tendency towards gum inflamation and reduced health of both the gums and  the teeth which they carry.  It is the compressibility of the synthetic plastics foam that allows the toothpick readily to be pushed through narrow gaps between the teeth, the laminar side or sides of the toothpick giving sufficient strength to prevent premature breakage.  The cellular interior of the toothpick enables it, if required, to carry a supply of a liquid or pasty mouthwash , antiseptic or the like and, when the toothpick is pushed through a narrow gap between two teeth, the compression of the cellular foam squeezes the mouthwash, antiseptic or the like out of the toothpick and onto the adjacent gum tissue, the compressed toothpick, which has a firm but certainly not cutting edge at its pointed "working" end thus automatically maintaining a firm rubbing action against both the edges of the teeth and the adjacent gum as it is pulled/pushed between the teeth.  It is , of course, possible to provide toothpicks of this kind already carrying a supply of liquid or pasty mouthwash, antiseptic or the like when the toothpicks are primarily intended for treatment of a gum infection or an unhealthy condition of the gums.

Figure 5 of the drawings illustrates a toothpick which is identical to that of Figures 1 to 4 except that it has a different shape at both its "working" end and its handle end. The point at the "working" end is somewhat sharper than in the case of the embodiment of Figures 1 to 4 , being formed by the junction between an upward curve from the lower edge of the toothpick and a gently concave downward curve from the upper edge thereof. The handle end of the toothpick is rounded at its upper edge and could, of course, also , or alternatively, be rounded at its lower edge. Figure 5 of the drawings shows that a number of different shapes are possible for both ends of a toothpick in accordance with the invention, the particular shape which is chosen being the choice of the manufacturer, the customer and / or the dental practitioner who recommends their use for dental hygiene and / or gum treatment.

Referring now to Figures 6 to 10 of the drawings, and particularly to Figures 6 and 7 of those drawings, a toothpick is illustrated which is of basically planar formation and that is formed from a synthetic plastics material such as, for example, sheet polystyrene or acetate. Both of these materials are tasteless, odourless, non-toxic and inexpensive although sheet acetate is somewhat more expensive than sheet polystyrene. In this case, there is no cellular construction and a toothpick ﹒ in accordance with this aspect of the invention is primarily, although not exclusively, intended for conventional use in removing adhering  food particles from teeth after a meal. The toothpick has a plain handle end at its right as seen in Figures 6 to 9 inclusive of the drawings and a pointed end at its left. However, in accordance with a feature of this aspect of the invention, a region of the toothpick towards the left-hand pointed "working" end thereof has corrugations throughout its top to bottom width, relative to the basically planar remainder of the toothpick. These corrugations can be seen in Figure 7 of the drawings and also in the modification of Figure 10 where the corrugations are to be found only adjacent one(the straight) of the two opposite edges of the toothpick. The corrugations ensure that, particularly between relatively widely spaced teeth, both edges of the teeth concerned are rubbed by the toothpick when it is pushed between them. The corrugations will, of course, resiliently flatten out when the toothpick is pushed or pulled through a gap between two teeth that is narrower than the perpendicular distance between  the peaks of the corrugations.

As in the case of Figure 5 of the drawings, Figures 8 and 9 are included merely to show that the pointed "working" end of a corrugated toothpick can have different shapes as may be desired  by the manufacturer, user or dental practioner. Toothpicks in accordance with Figures 6  to 10 of the drawings can readily be cut/pressed from a polystyrene, acetate or other synthetic plastics sheet using a simple form of press   tool which by pressure alone ,or a combination of heat and pressure, will readily form the required corrugations towards the "working" end of the toothpick. As with the embodiments of Figures 1 to 5 of the drawings, toothpicks in accordance with Figures 6 to 10 thereof can readily be connected to a base strip by a score line or perforation to enable them to be presented in holders somewhat resembling books of matches. Alternatively, the toothpicks may be packed individually in enclosing paper or other sleeves.

Toothpicks in accordance with the invention are extremely effective in use and can be manufactured quickly, easily and inexpensively in large numbers making them readily acceptable for use in holders carrying material advertising  bars,      . , restaurants, other eating places and so on. Advertising space can of course, be sold on the holders of numbers of the toothpicks or, if preferred, upon the wrapping sleeves of individual toothpicks. Alternatively, where the toothpicks are primarily

0105654

intended for the treatment of an existing gum condition,
instructions as to when and how they should best be
used can be provided upon holders for numbers of them
or upon sleeves or wrappers for individual toothpicks.

CLAIMS

1. A toothpick of substantially planar formation, characterised in that the toothpick is formed wholly or partly from a foamed synthetic plastics material (Figures 1 to 5).

2. A toothpick as claimed in Claim 1, characterised in that the foamed synthetic plastics material is expanded polystyrene foam (Figures 1 to 5).

3. A toothpick as claimed in Claim 2, characterised in that the toothpick is formed wholly or principally from laminate foam section, the expanded polystyrene foam being flanked at at least one of its sides by a polyvinyl chloride layer having a substantially smooth outer surface. (Figures 1 to 5).

4. A toothpick as claimed in Claim 3, characterised in that the laminate foam section has a thickness of substantially three millimetres (Figures 1 to 5).

5. A toothpick as claimed in any preceding claim, characterised in that it is shaped to define a pointed end and a handle end.

6. A toothpick as claimed in any preceding claim, characterised in that the cells of the foamed synthetic plastics material contain a supply of a liquid or pasty mouthwash, antiseptic or the like.

7. A toothpick of basically planar formation, characterised in that it is formed from a synthetic plastics material and has a pointed end and a handle end, and characterised in that a region thereof towards said pointed end has corrugations, at at least one of its longitudinal edges, relative to the basically planar remainder of the toothpick (Figures 6 to 10).

8. A toothpick as claimed in claim 7, characterised in that the synthetic plastics material is sheet polystyrene or sheet acetate (Figures 6 to 10).

9. A toothpick as claimed in any preceding claim, characterised in that it is connected by a score line or perforation to a base strip in common with other substantially identical toothpicks whereby individual toothpicks can be torn from said base strip when required.

10. A toothpick as claimed in any one of Claims 1 to 8, characterised in that it is formed as part of a strip in which a plurality of substantially identical toothpicks are joined together end-to-end, each individual toothpick being reversed relative to both its neighbours as regards both its opposite edges and its opposite ends.

0105654

1/1

FIG.1.

FIG.2.

FIG.3.

FIG.4.

FIG.5.

FIG.6.

FIG.7.

FIG.8.

FIG.9.

FIG.10.

European Patent
Office

EUROPEAN SEARCH REPORT

0105654

Application number

EP 83 30 5463

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-3 590 814 (BENNETT et al.) * Claim 3; figures; column 8, lines 1-25, 69-75 * | 1-6 | A 61 C 15/00 |
| X | US-A-3 078 856 (BENDER) * Column 2, lines 3-18 * | 1-3 | |
| A | US-A-1 746 591 (HEYMANN) * Page 1, lines 51-71 * | | |
| A | US-A-1 575 317 (CARMICHAEL) * Page 1, lines 40-50 * | | |
| A | FR-A-1 269 529 (COLLO RHEIN COLLODIUM) | | TECHNICAL FIELDS SEARCHED (Int. Cl. ³) |
| A | US-A-2 527 857 (STRACHAN) | | A 61 C |

The present search report has been drawn up for all claims

| Place of search | Date of completion of the search | Examiner |
|---|---|---|
| THE HAGUE | 09-12-1983 | GLAS J. |